# FASCICULE DE BREVET EUROPEEN

(11) **EP 0 624 514 B1**
(45) Date de publication et mention de la délivrance du brevet: **19.06.1996**
(21) Numéro de dépôt: 94400805.1
(22) Date de dépôt: 13.04.1994
(51) Int. Cl.: B64D 25/04

(54) **Piètement de siège d'appareil de transport aérien comportant un dispositif d'absorption d'énergie rapporté**
Stützstruktur für Flugzeugsitz mit energieabsorbierender Sitzanlage
Structure for aircraft seat with an energy absorbing system

(30) Priorité: 14.05.1993 FR 9305865
(43) Date de publication de la demande: 17.11.1994
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert René, F-75116 Paris (FR)
(74) Mandataire: Derambure, Christian

(56) Documents cités:
- EP-A- 0 495 318
- US-A- 4 911 381

## Description

L'invention concerne un piètement de siège d'appareil de transport aérien comportant un dispositif d'absorption d'énergie rapporté.

Lorsque l'on soumet un élément de structure à une accélération ou une décélération importante par rapport à sa structure porteuse, l'élément de structure, s'il est rigidement attaché à sa structure porteuse, aura tendance à s'arracher de celle-ci sous l'action de sa propre charge d'inertie. Dans le cas où cet élément est déformable, une partie de l'énergie due à la charge d'inertie de l'élément de structure sera transformée en énergie cinétique laquelle pourra être absorbée par un élément absorbeur.

Dans certains cas, on peut être amené à devoir limiter le déplacement relatif de l'élément de structure par rapport à la structure support, sous peine, par exemple, d'endommager des éléments périphériques à celui-ci ou des éléments qu'il supporte.

Il est donc impératif dans ce cas d'obtenir le meilleur rapport entre l'absorption d'énergie et la limitation des déplacements.

Ce souci est en particulier constant chez les constructeurs de siège d'appareils de transport aérien. En effet, dans le cas d'un crash de l'avion ou de toute autre cause générant une accélération ou une décélération brusque trop importante, l'énergie potentielle de la charge inertielle du siège et de l'occupant doit être atténuée par le déplacement des structures du siège et absorption de l'énergie cinétique résultante et cela afin d'éviter que le siège et l'occupant ne s'arrache du plancher de la cabine. Cependant, ces déplacements doivent être limités de sorte que l'occupant ne vienne pas s'encastrer dans le siège qui est situé devant lui. Actuellement, les normes de sécurité imposent des déplacements maximaux dans plusieurs directions et également sur plusieurs éléments (ex : dossier ou assise).

Les solutions actuellement utilisées pour obtenir le meilleur rapport absorption d'énergie/déplacement reposent sur des structures articulées ou déformables dont la rigidité, en position de fonctionnement normal, l'absorption d'énergie et le contrôle des déplacements en position accidentée est assurée par un dispositif d'absorption d'énergie.

FR-A-2 612 151 décrit un piètement de siège d'avion pourvue d'un dispositif d'absorption d'énergie comprenant une tige rigide dont une extrémité est associée à un premier élément de la structure, et dont l'autre extrémité est acérée et engagée dans un bloc de matière synthétique plastique ou équivalente, de sorte que cette extrémité acérée de la tige peut pénétrer dans le bloc en coupant la matière qui le constitue, à partir d'une certaine valeur de la force de pression de la tige sur le bloc. Le bloc est associé à un deuxième élément de la structure ayant un mouvement relatif par rapport au premier en cas d'accélération ou de décélération brusque accidentelle. Ce dispositif peut fonctionner en traction comme en compression. Un tel dispositif comporte un certain nombre d'inconvénient comme son encombrement et la difficulté d'obtenir facilement et à moindre coût une gamme importante de valeur de résistance de déclenchement et de capacité d'absorption d'énergie. En outre, de tels dispositifs ont une tolérance de plus ou moins 10 % sur leur valeur de résistance, ce qui ne permet pas d'optimiser la sécurité quant au déclenchement du dispositif en fonction de l'utilisation qui est faite du piètement (poids du siège à supporter, nombre de places assises, position du piètement par rapport au plancher de l'appareil et aux places assises...).

US-A-4 911 381 présente un piètement de siège d'avion ayant un dispositif d'absorption d'énergie équivalent au précédent et générant les mêmes inconvénients, et comprenant un pied arrière articulé à une base inférieure triangulaire..

L'invention vise à pallier ces inconvénients en proposant un piètement dont la capacité à absorber de l'énergie peut être modifiée et adaptée aux conditions d'utilisation du piètement de façon simple, rapide, et peu onéreuse. Plus particulièrement, l'invention vise à proposer un tel piètement avec lequel cette modification est possible sans que les positions relatives et, les formes et les dimensions des éléments constitutifs du piètement lui-même ne soient pas modifiés.

L'invention a également pour objet de proposer un piètement qui présente les mêmes avantages que les piètements connus mentionnés ci-dessus, mais qui soit plus léger et, de fabrication et de montage particulièrement simples.

L'invention vise également à proposer un tel piètement qui absorbe l'énergie lors d'un choc avec un pivotement du pied avant limité à une valeur maximum prédéterminée.

L'invention vise également à proposer un tel piètement qui soit susceptible de satisfaire aux essais dynamiques de type "16g" imposés par les normes internationales de l'aviation civile.

A cet effet, l'invention concerne un piètement pour siège d'appareil de transport aérien comprenant au moins un élément formant pied avant et au moins un élément formant pied arrière, et des moyens d'absorption d'énergie actifs lors du mouvement relatif d'un élément mobile de la structure du piètement par rapport à un autre élément du piètement ou du plancher de la cabine de l'appareil, sous l'effet d'une décélération subie par le siège au delà d'une valeur prédéterminée, caractérisé en ce que les moyens d'absorption d'énergie comprennent un dispositif d'absorption d'énergie comportant une pièce mâle pénétrant à force avec déformation plastique dans un évidement d'une pièce femelle, en ce que l'une des pièces femelle ou mâle est rapportée sur/et directement associée à l'élément mobile, et en ce que l'autre pièce mâle ou femelle est rapportée sur/et directement associée à l'autre élément.

Un premier avantage principal de la présente invention provient du fait que le dispositif d'absorption d'énergie est rapporté sur la structure du piètement et associé entre deux éléments de cette structure et cela sans autre élément de liaison entre ces deux éléments de structure ou entre l'un de ses éléments avec le reste de la structure.

Cela veut dire que le dispositif d'absorption d'énergie n'est pas intercalé directement dans la structure du piètement de siège, mais est rajouté en parallèle aux éventuels autres moyens d'association directe entre les deux éléments concernés.

Un deuxième avantage de l'invention provient de la simplicité structurelle du dispositif d'absorption d'énergie permettant la fabrication de tels dispositifs avec un outillage classique et d'obtenir une gamme conséquente de dispositifs fonction de leur résistance de déclenchement par simple variation des caractéristiques dimensionnelles ou de matériau de pièces mâles et/ou femelles.

Un troisième avantage de cette invention résulte de la combinaison des deux précédents et concerne l'amélioration apportée à la sécurité des passagers relativement à l'absorption d'énergie du siège en cas de crash.

D'autres avantages résulteront de la description qui va suivre en référence aux figures annexées dans lesquelles :
- la figure 1 est une représentation schématique en coupe d'un dispositif d'absorption d'énergie monté sur un piètement de siège selon l'invention.
- la figure 2 est une représentation schématique du dispositif de la figure 1 selon la ligne II, II.
- la figure 3 est une représentation schématique d'un piètement selon l'invention dans une position normale d'utilisation.
- la figure 4 est une représentation schématique d'un piètement selon l'invention dans une position accidentée.

Le piètement de siège d'appareil de transport aérien selon l'invention, comprend au moins un élément 30 formant pied avant et au moins un élément 31 formant pied arrière. Le piètement comporte en outre des moyens d'absorption d'énergie. Lors du mouvement relatif d'un élément mobile 10 du siège par rapport à un autre élément 20 du siège ou du plancher de la cabine de l'appareil, un dispositif d'absorption d'énergie 40 faisant partie des moyens d'absorption d'énergie et comprenant une pièce mâle 1 pénétrant à force avec déformation plastique dans un évidement 2 prévu dans une pièce femelle 3, absorbe par les déformations tout ou partie de l'énergie relative à ce déplacement. Ce mouvement relatif peut être généré par l'action d'une force relative subie par l'élément mobile 10 par rapport à l'autre élément 20 sous l'effet d'une décélération subie par le siège au delà d'une valeur prédéterminée. Selon l'invention, l'une des pièces mâle 1 ou femelle 3, est rapportée sur/et directement associée à l'élément mobile 10, indépendamment de tout autre moyen de liaison de l'élément 10 avec le reste du siège ou du plancher, et l'autre pièce femelle 3 ou mâle 1 est de son côté rapportée sur/et directement associée à l'autre élément 20 indépendamment de tout autre moyen de liaison de l'autre élément 20 avec le reste du siège ou l'élément mobile 10.

Dans le mode de réalisation représenté sur les figures et selon l'invention, le piètement comprend une base triangulaire 33 définissant un ancrage avant 34 et un ancrage arrière 35 du siège au plancher de la cabine, et un sommet intermédiaire surélevé 36. Le piètement comprend en outre, au moins un pied 31 associé par son extrémité supérieure 37 à la structure du siège et par son extrémité inférieure 38 à la base triangulaire 33. Dans ce mode de réalisation et selon l'invention, ledit élément mobile 10 est constitué du pied 31 et l'autre élément 20 est constitué de la base triangulaire 33, et le dispositif d'absorption d'énergie 40 est rapporté sur/et associé directement entre le pied 31 et la base 33. Ce pied 31 est associé par son extrémité 38 du moins au voisinage du sommet intermédiaire 36 surélevé de la base triangulaire 33. De façon préférée non limitative, ce pied 31 est associé rigidement à la base 33 par l'intermédiaire d'un dispositif 32 d'absorption d'énergie intégré au piètement entre le pied 31 et la base 33, faisant partie des moyens d'absorption d'énergie, et qui est susceptible lors de l'application de la force relative de fléchir et ainsi de permettre le pivotement du pied 31 en rotation autour d'un axe passant sensiblement par le sommet intermédiaire 36.

Dans ce mode de réalisation, le dispositif d'absorption d'énergie 40 est associé au pied 31 au moins au voisinage de son extrémité inférieure 38 indépendamment du dispositif 32 de flexion, et est associé à la base triangulaire 33 au moins au voisinage du sommet intermédiaire 36 indépendamment de l'association rigide du pied 31 à la base 33.

La partie femelle 3 du dispositif d'absorption d'énergie 40 comporte un évidement 2 ayant une partie évasée 4 prolongée par une partie oblongue 5 ayant deux portées 6 en regard et une extrémité 7 opposée à la partie évasée 4.

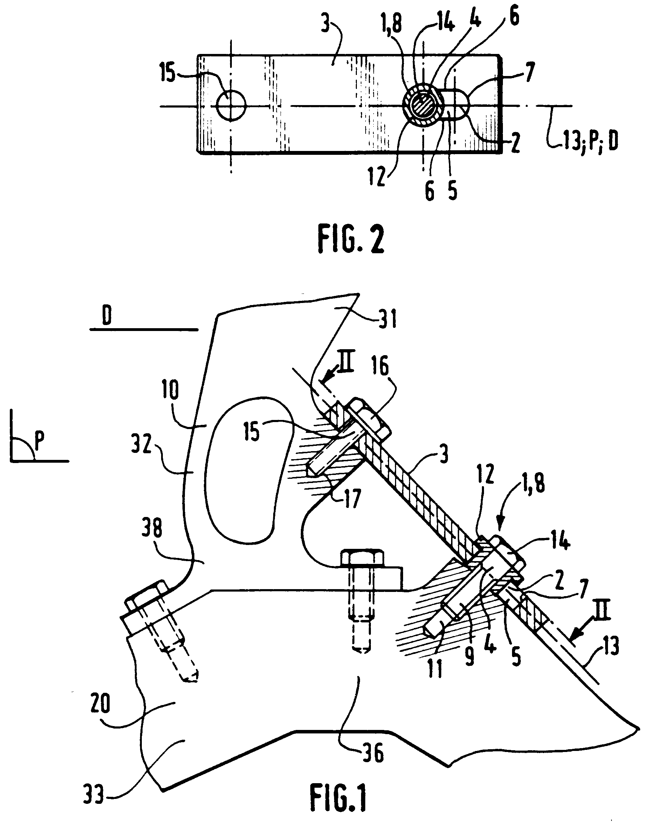

Dans une position inactive du dispositif d'absorption d'énergie 40 (figures 1, 2, 3), la partie évasée coopère avec la partie mâle 1 formant ergot 8 de largeur sensiblement supérieure à la largeur entre les portées 6 de la partie oblongue 5.

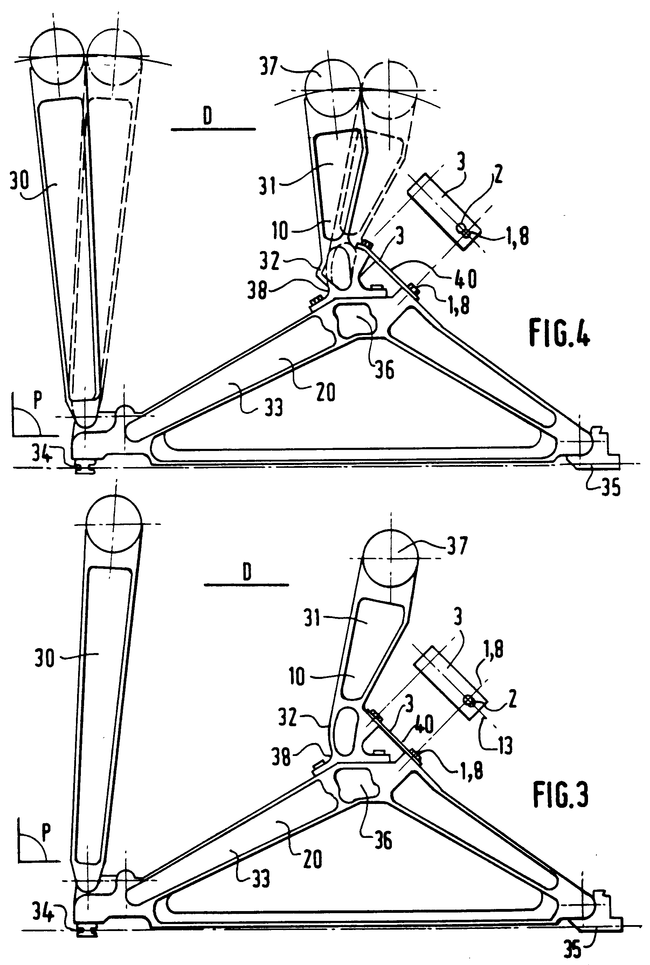

Dans une position active (figure 4), le dispositif d'absorption d'énergie 40 absorbe tout ou partie de l'énergie créée par le déplacement, par les déformations plastiques des portées de la partie oblongue 5 de la pièce femelle 3 réalisées par l'ergot de la partie mâle 1. Ce déplacement est limité par la coopération de l'ergot 8 de la partie mâle 1 avec l'extrémité 7 de la partie oblongue 5 qui forme butée de fin de course pour l'ergot 8.

Dans le mode de réalisation représenté sur les figures, le dispositif d'absorption d'énergie 40 comporte une pièce mâle 1 sous forme d'ergot comprenant une partie d'association 9 filetée coopérant avec un trou taraudé 11 de l'élément 20 auquel elle est associée.

Dans le mode de réalisation représenté sur les figures, le dispositif d'absorption d'énergie 40 comporte une pièce femelle 3 dont la partie oblongue 5 a un grand axe 13 appartenant à un plan P passant par la direction D du mouvement relatif.

Dans ce mode de réalisation, la partie évasée 4 est un trou circulaire 4 et la partie oblongue 5 est une lumière oblongue 3 tout deux traversant de part en part la pièce femelle 3. La pièce mâle 1 formant ergot 8 comprend une bague 12 de diamètre extérieur sensiblement égal au diamètre du trou circulaire 4 à travers laquelle passe une vis 14 destinée à coopérer avec le trou taraudé 11 de l'élément 20 auquel la pièce mâle 1 formant ergot 8 est associée. Préférentiellement mais non limitativement le diamètre de la vis 14 est sensiblement égal à la largeur entre parois 6 de la lumière oblongue 5.

Dans ce mode de réalisation et selon l'invention, la pièce femelle 3 est une plaque plane de forme rectangulaire et dont le grand axe 13 de la partie oblongue 5 est parallèle aux grands côtés du rectangle et passe par la grande médiane du rectangle. Cette pièce femelle est associée à l'élément mobile 10 par l'intermédiaire d'un trou 15 d'association traversé par une vis 16 coopérant avec un trou 17 taraudé de l'élément mobile 10.

La valeur au delà de laquelle le dispositif d'absorption d'énergie fait son office est prédéterminée par les matériaux utilisés pour les pièces mâle et femelle, l'épaisseur de la pièce femelle et, le rapport entre la largeur de la lumière oblongue 5 et le diamètre du trou circulaire 4 ou de l'ergot 8. La connaissance de ces paramètres permet d'établir la valeur de la force nécessaire pour dépasser la limite élastique et entrer dans le domaine plastique des portées 6 de la lumière oblongue 5. La limitation du mouvement est définie par la connaissance de la longueur de la lumière oblongue 5.

Bien que seul un mode de réalisation de l'invention ainsi qu'un seul mode de fonctionnement aient été décrits, il est évident que toute modification ou toute variante réalisée par l'homme du métier en restant dans le cadre de la revendication 1 qui suit ne sortirait pas du cadre de la présente invention. Par exemple, le dispositif d'absorption d'énergie pourrait travailler en compression. De même, il pourrait comprendre deux lumière oblongues 5, une par trou 4 et 15. De même l'absorption d'énergie pourrait être réalisée par déformation de la partie mâle 1 formant ergot 8 par les portées 6 de l'évidement de la partie femelle.

## Revendications

1. Piètement pour siège d'appareil de transport aérien comprenant au moins un élément (30) formant pied avant et au moins un élément (31) formant pied arrière, et des moyens d'absorption d'énergie (32, 40) actifs lors du mouvement relatif d'un élément mobile (10) de la structure du piètement par rapport à un autre élément (20) du piètement ou du plancher de la cabine de l'appareil, sous l'effet d'une décélération subie par le siège au delà d'une valeur prédéterminée, caractérisé en ce que les moyens d'absorption d'énergie (32, 40) comprennent un dispositif d'absorption d'énergie (40) comportant une pièce mâle (1) pénétrant à force avec déformations plastiques dans un évidement (2) d'une pièce femelle (3), en ce que l'une des pièces femelle (3) ou mâle (1) est rapportée sur/et directement associée à l'élément mobile (10), et en ce que l'autre pièce mâle (1) ou femelle (3) est rapportée sur/et directement associée à l'autre élément (20).

2. Piétement selon la revendication 1, comprenant une base triangulaire (33) définissant un ancrage avant (34) et un ancrage arrière (35) au plancher de la cabine de l'appareil et un sommet intermédiaire surélevé (36) ; et au moins un pied (31) associé par son extrémité supérieure (37) à la structure du siège et par son extrémité inférieure (38) à la base triangulaire (33), caractérisé en ce que l'élément mobile (10) est le pied (31) et l'autre élément (20) est la base triangulaire (33), le dispositif d'absorption d'énergie (40) étant rapporté sur/et associé directement entre le pied (31) et la base (33).

3. Piètement selon la revendication 2, caractérisé en ce que le pied (31) est associé par son extrémité inférieure (38) au moins au voisinage du sommet intermédiaire (36) surélevé de la base (33).

4. Piètement selon la revendication 3, caractérisé en ce que le dispositif d'absorption d'énergie (40) est associé directement au pied (31) au moins au voisinage de l'extrémité inférieure (38) et est associé directement à la base (33) au moins au voisinage du sommet intermédiaire surélevé (36) de telle manière qu'il travaille en traction dans le cas où la décélération subie par le siège au delà de ladite valeur prédéterminée tend à faire pivoter le pied (31) vers l'avant par rapport à la base (33).

5. Piètement selon l'une quelconque des revendications 1 à 4, caractérisé en ce que l'évidement (2) de la pièce femelle (3) comporte une partie évasée (4) prolongée par une partie oblongue (5) ayant deux portées (6) en regard et une extrémité (7) opposée à la partie évasée (4) et ayant une largeur entre les portées (6) inférieure à la partie évasée (4), ladite partie évasée (4) coopérant en position inactive du dispositif avec la pièce mâle (1) en forme d'ergot (8) de largeur sensiblement supérieure à la largeur entre les portées de la partie oblongue (5), de telle manière qu'en action, le dispositif (40) absorbe de l'énergie par déformation plastique des portées (6) de la partie oblongue (5) de la pièce femelle (3) écartées par l'introduction, entre elles de l'ergot (6) formant la partie mâle.

6. Piètement selon les revendications 2 et 5, caractérisé en ce que l'évidement (2) comporte une extrémité (7) formant butée de fin de course pour la pièce mâle (1) limitant l'amplitude du mouvement du pied (31) par rapport à la base (33).

7. Piètement selon la revendication 5 ou 6, caractérisé en ce que l'ergot (8) comprend une partie d'association (9) filetée coopérant avec un trou taraudé (11) de l'élément (20) auquel il est associé.

8. Piètement selon l'une quelconque des revendications 5 à 7, caractérisé en ce que la partie oblongue (5) à un grand axe (13) appartenant à un plan (P) passant par la direction (D) du mouvement relatif de la pièce femelle (3) par rapport à la pièce mâle (1).

9. Piètement selon l'une quelconque des revendications 5 à 8, caractérisé en ce que la partie évasée (4) est un trou circulaire (4) et la partie oblongue (5) est une lumière oblongue (5) traversant de part en part la pièce femelle (3).

10. Piètement selon la revendication 9, caractérisé en ce que la pièce mâle (1) comprend une bague (12) extérieure dont la surface extérieure vient coopérer avec les portées (6) de la lumière oblongue (5) lorsque le dispositif (40) est actif.

## Claims

1. An underframe for an air transport seat comprising at least one member (30) forming a front foot and at least one member (31) forming a rear foot, and energy absorbing means (32, 40) active upon the relative movement of a mobile member (10) of the structure of the underframe with respect to another member (20) of the underframe or of the floor of the cabin of the craft, under the effect of a deceleration undergone by the seat beyond a predetermined value, characterised in that the energy absorbing means (32, 40) comprise an energy absorbing device (40) including a male piece (1) penetrating by force with plastic deformations into a recess (2) of a female piece (3), in that one of the female (3) or male (1) pieces is mounted on and directly associated with the mobile member (10), and in that the other male (1) or female (3) piece is mounted on and directly associated with the other member (20).

2. An underframe according to claim 1, comprising a triangular base (33) defining a front anchorage (34) and a rear anchorage (35) at the floor of the cabin of the craft and a raised intermediate top (36); and at least one foot (31) associated at its upper end (37) with the structure of the seat and at its lower end (38) with the triangular base (33), characterised in that the mobile member (10) is the foot (31) and the other member (20) is the triangular base (33), the energy absorbing device (40) being mounted and directly associated between the foot (31) and the base (33).

3. An underframe according to claim 2, characterised in that the foot (31) is associated at its lower end (38) at least in the vicinity of the raised intermediate top (36) of the base (33).

4. An underframe according to claim 3, characterised in that the energy absorbing device (40) is directly associated with the foot (31) at least in the vicinity of the lower end (38) and is directly associated with the base (33) at least in the vicinity of the raised intermediate top (36) so that it bears a tractive stress in the case where the deceleration undergone by the seat beyond said predetermined value tends to make the foot (31) pivot forward with respect to the base (33).

5. An underframe according to any of claims 1 to 4, characterised in that the recess (2) of the female piece (3) includes a flared part (4) prolonged by an oblong part (5) having two bearings (6) facing each other and an end (7) opposite to the flared part (4) and having a width between the bearings (6) inferior to the flared part (4), said flared part (4) cooperating, in the inactive position of the device, with the male piece (1) having the shape of a pin (8) with a width substantially greater than the width between the bearings of the oblong part (5), so that, in action, the device (40) absorbs the energy through the plastic deformation of the bearings (6) of the oblong part (5) of the female piece (3) separated by the introduction, between them, of the pin (8) forming the male part.

6. An underframe according to claims 2 and 5, characterised in that the recess (2) includes an end (7) forming a limit stop for the male piece (1) limiting the amplitude of the movement of the foot (31) with respect to the base (33).

7. An underframe according to claim 5 or 6, characterised in that the pin (8) comprises a threaded associating part (9) cooperating with a tapped hole (11) of the member (20) with which it is associated.

8. An underframe according to any of claims 5 to 7, characterised in that the oblong part (5) has a major axis (13) located on a plane (P) crossing the direction (D) of the relative movement of the female piece (3) with respect to the male piece (1).

9. An underframe according to any of claims 5 to 8, characterised in that the flared part (4) is a circular hole (4) and the oblong part (5) is an elongated slot (5) traversing the female piece (3) through and through.

10. An underframe according to claim 9, characterised in that the male piece (1) comprises an outer ring (12) whose outer surface will cooperate with the bearings (6) of the elongated slot (5) when the device (40) is active.

## Patentansprüche

1. Gestell für einen Luftfahrzeugsitz mit mindestens einem Element (30), welches den Vorderfuß bildet und mindestens einem Element (31), welches den Hinterfuß bildet und mit aktiven Energieabsorptionsmitteln (32, 40) bei der Relativbewegung eines beweglichen Elements (20) der Gestellstruktur in bezug auf ein anderes Element (20) des Gestells oder des Bodens der Fahrzeugkabine infolge einer über einen vorbestimmten Wert hinausgehenden Verlangsamung, die der Sitz erfährt, dadurch gekennzeichnet, daß die Energieabsorptionsmittel (32, 40) eine Energieabsorptionsvorrichtung (40) umfassen mit einem spitzendigen Teil (1), das unter Kraftaufwand und plastischen Verformungen in eine Ausnehmung (2) eines trichterförmigen Teils (3) eindringt, daß eins der trichterförmigen (3) bzw. spitzendigen (1) Teile dem beweglichen Element (10) angestückt und direkt zugeordnet wird und daß das andere spitzendige (1) bzw. trichterförmige (3) Teil dem anderen Element (20) angestückt und direkt zugeordnet wird.

2. Gestell nach Anspruch 1 mit einer dreieckigen Basis (33), welche auf dem Boden der Flugzeugkabine eine vordere Verankerung (34) und eine hintere Verankerung (35) bildet sowie eine hochstehende Zwischenspitze (36) und mit mindestens einem Fuß (31), der mit seinem oberen Ende (37) der Struktur des Sitzes und mit seinem unteren Ende (38) der dreieckigen Basis (33) zugeordnet ist, dadurch gekennzeichnet, daß das bewegliche Element (10) der Fuß (31) ist und das andere Element (20) die dreieckige Basis (33) ist, wobei die Energieabsorptionsvorrichtung (40) zwischen dem Fuß (31) und der Basis (33) eingesetzt und diesen direkt zugeordnet ist.

3. Gestell nach Anspruch 2, dadurch gekennzeichnet, daß der Fuß (31) mit seinem unteren Ende (38) mindestens dem Umgebungsbereich der hochstehenden Zwischenspitze (36) der Basis (33) zugeordnet ist.

4. Gestell nach Anspruch 3, dadurch gekennzeichnet, daß die Energieabsorptionsvorrichtung (40) dem Fuß (31) mindestens im Umgebungsbereich des unteren Endes (38) so direkt zugeordnet ist und der Basis (33) mindestens im Umgebungsbereich der hochstehenden Zwischenspitze (36) so direkt zugeordnet ist, daß sie unter Zugkraft steht, falls die über den vorbestimmten Wert hinausgehende Verlangsamung, die der Sitz erfährt, dazu tendiert, den Fuß (31) in bezug auf die Basis (33) nach vorne zu schwenken.

5. Gestell nach einem der Ansprüche 1 bis 4, dadurch gekennzeichnet, daß die Ausnehmung (2) des trichterförmigen Teils (3) einen konisch erweiterten Bereich (4) aufweist, der durch einen länglichen Bereich (5) mit zwei sich gegenüberliegenden Auflageflächen (6) und einem vom konisch erweiterten Bereich (4) abgewandten Ende (7) verlängert wird und dessen Breite zwischen den Auflageflächen (6) kleiner ist als der konisch erweiterte Bereich (4), wobei der konisch erweiterte Bereich (4) bei inaktiver Position der Vorrichtung mit dem spitzendigen Teil (1) in Form eines Zapfens (8) zusammenwirkt, dessen Breite etwas größer ist als die Breite zwischen den Auflageflächen des länglichen Bereichs (5), so daß die Vorrichtung (40) bei aktiver Position durch plastische Verformung der Auflageflächen (6) des länglichen Bereichs (5) des trichterförmigen Teils (3), welche durch das Eindringen des das spitzendige Teil bildenden Zapfens (6) gespreizt werden, Energie absorbiert.

6. Gestell nach Anspruch 2 und 5, dadurch gekennzeichnet, daß die Ausnehmung (2) ein Ende (7) aufweist, das für das spitzendige Teil (1) einen Endanschlag bildet, wodurch der Bewegungsausschlag des Fußes (31) in bezug auf die Basis (33) begrenzt wird.

7. Gestell nach Anspruch 5 oder 6, dadurch gekennzeichnet, daß der Zapfen (8) einen Zuordnungsbereich (9) mit einem Außengewinde umfaßt, der mit einem Gewindeloch (11) des Elements (20), dem er zugeordnet ist, zusammenwirkt.

8. Gestell nach einem der Ansprüche 5 bis 7, dadurch gekennzeichnet, daß der längliche Bereich (5) eine zu einer Ebene (P) zugehörige große Achse (13) hat, die durch die Richtung (D) der Relativbewegung des trichterförmigen Teils (3) in bezug auf das spitzendige Teil (1) läuft.

9. Gestell nach einem der Ansprüche 5 bis 8, dadurch gekennzeichnet, daß der konisch erweiterte Bereich (4) ein kreisförmiges Loch (4) ist und der längliche Bereich (5) ein Langloch (5) ist, welches das trichterförmige Teil (3) vollkommen durchdringt.

10. Gestell nach Anspruch 9, dadurch gekennzeichnet, daß das spitzendige Teil (1) einen außenliegenden Ring (12) aufweist, dessen Außenfläche dann mit den Auflageflächen (6) des Langlochs (5) zusammenwirkt, wenn die Vorrichtung (40) aktiv ist.
